# EUROPÄISCHE PATENTSCHRIFT

(11) **EP 3 313 784 B1**
(45) Veröffentlichungstag und Bekanntmachung des Hinweises auf die Patenterteilung: **20.05.2020**
(21) Anmeldenummer: 16739421.2
(22) Anmeldetag: 27.06.2016
(51) Int. Cl.: C01G 28/02, C01B 25/30, C02F 1/28, C02F 101/10, C09D 1/00

(54) **HERSTELLUNG VON KALZIUMPHOSPHATE- UND/ODER KALZIUMARSENAT-SCHICHTEN AUF CSH-PHASE AUFWEISENDES SILIZIUMBASIERTES SUBSTRAT**
PRODUCTION OF SILICON-BASED SUBSTRATE COMPRISING CALCIUM PHOSPHATE LAYERS AND/OR CALCIUM ARSENATE LAYERS ON C-S-H PHASE
PRODUCTION DE COUCHES DE PHOSPHATE DE CALCIUM ET/OU D'ARSÉNIATE DE CALCIUM SUR UN SUBSTRAT À BASE DE SILICIUM PRÉSENTANT UNE PHASE C-S-H

(30) Priorität: 26.06.2015 DE 102015110367
(43) Veröffentlichungstag der Anmeldung: 02.05.2018
(73) Patentinhaber: Thißen, Vera, 76297 Stutensee (DE)
(72) Erfinder: THISSEN, Peter, 76297 Stutensee (DE); BERGDOLT, Samuel, 76706 Dettenheim (DE); WOHLGEMUTH, Jonas, 67454 Haßloch (DE); SCHUHMANN, Rainer, 76149 Karlsruhe (DE); KÖNIGER, Franz, 67470 Buhl (FR); EHBRECHT, Anke, 76187 Karlsruhe (DE)
(74) Vertreter: Fitzner, Uwe
(86) Internationale Anmeldenummer: PCT/EP2016/064841
(87) Internationale Veröffentlichungsnummer: WO 2016/207434

(56) Entgegenhaltungen:
- EP-A1- 2 511 243
- WO-A1-97/09286
- WO-A2-2009/062973
- US-A1- 2002 144 888
- UTE BERG ET AL: "Calcium silicate hydrate triggered phosphorus recovery-an efficient way to tap the potential of waste- and process waters as key resource", INTERNET CITATION, 1. Januar 2006 (2006-01-01), Seiten 1747-1765, XP002680540, Gefunden im Internet: URL:http://www.environmental-expert.com/Fi les%5C5306%5Carticles%5C8896%5C137.pdf [gefunden am 2012-07-20]
- EBBERT CHRISTOPH ET AL: "Toward a microscopic understanding of the calcium-silicate-hydrates/water interface", APPLIED SURFACE SCIENCE, Bd. 290, 19. November 2013 (2013-11-19), Seiten 207-214, XP028806645, ISSN: 0169-4332, DOI: 10.1016/J.APSUSC.2013.11.045

## Beschreibung

Die vorliegende Erfindung betrifft ein Silicium enthaltendes Substrat beschichtet mit einer oder mehreren Schichten, wobei mindestens eine Schicht Kalziumphosphat (Ca3(PO4)2), Kalziumarsenat (Ca3(AsO4)2), Kalziumphosphat-Kalziumarsenat-Misch-Schicht oder die entsprechenden Hydrate enthält oder daraus besteht, dessen Herstellung und Verwendung.

Beschichtete oder teilbeschichtete sowie mit unterschiedlichen Elementen dotierte Silicium enthaltende Substrate sind z.B. aus der Halbleiter-Technologie bekannt. Ferner ist aus der Forschung z.B. Wollastonit als Silicium enthaltendes Substrat bekannt, das eine Kalzium-Silikat-Hydrat-Phase aufweist (Ebbert et al., Applied Surface Science 290, S. 207, 2014). Konkrete, praktische Anwendungen werden in dieser Veröffentlichung jedoch nicht genannt.

EP 2 511 243 A1 betrifft ein Verfahren zur Rückgewinnung von Phosphor aus Abwasser mit Hilfe eines Calcium-Silicat-Hydrates (CSH) als Kristallisationssubstrat und eine Phosphorrückgewinnungsanlage für den kontinuierlichen Betrieb.

WO 97/09286 A1 betrifft bioaktive, künstliche, gesinterte Zusammensetzungen von Calciumphosphatphasen, die in der Lage sind, die Aktivität von Knochenzellen zu unterstützen.

Ute Berg et al. ("Calcium silicate hydrate triggered phosphorus recovery an efficient way to tap the potential of waste- and process waters as key resource", 1. Januar 2006, Seiten 1747-1765, XP002680540) beschreibt den Einsatz von Calcium-Silikat-Hydraten (CSH), die Nebenprodukte der Baustoffindustrie sind, um Phosphor aus Abwasser- und Prozesswasser durch Kristallisation zurückzugewinnen.

Ebbert Christoph et al. ("Toward a microscopic understanding of the calciumsilicate-hydrates/water interface", applied surface science, Bd. 290, 19. November 2013, Seiten 207-214, XP028806645) untersucht die Bildung einer C-S-H-Phase auf einem oxidierten Siliziumwafer.

WO 2009/062973 A2 beschreibt ein betrifft Verfahren zur Herstellung von Calciumphosphatpartikeln.

US 2002/144888 A1 betrifft ein Verfahren zum Ausbilden dünner poröser Schichten aus Calciumphosphat auf einer Siliciumwaferoberfläche unter Verwendung eines Hochspannungsfunkens.

Aufgabe der vorliegenden Erfindung war es, neue Einheiten oder Vorrichtung auf Basis bekannter, kostengünstiger und leicht zugänglicher Silicium enthaltenden Substrate zur Verfügung zu stellen. Ferner sollen diese neuen Einheiten oder Vorrichtungen vielfach anwendbar sein, einfach und kostengünstig in der Herstellung sowie leicht zu handhaben sein.

Gelöst wird diese Aufgabe durch ein Silicium enthaltendes Substrat ausgewählt aus der Gruppe bestehend aus Silicium-Wafer, Silicium-Pulver oder Siliciumdioxid enthaltende Materialien, beschichtet mit einer oder mehreren Schichten, wobei mindestens eine Schicht Kalziumphosphat (Ca3(PO4)2), Kalziumarsenat (Ca3(AsO4)2), Kalziumphosphat- Kalziumarsenat-Misch-Schicht oder die entsprechenden Hydrate enthält oder daraus besteht. Das Silicium enthaltende Substrat ist dadurch gekennzeichnet, dass das Kalziumphosphat oder Kalziumarsenat oder das entsprechende Hydrat in situ gebildet ist mit einer C-S-H-Phase (Kalzium-Silikat-Hydrat-Phase) als Kalzium-Quelle und das Silizium enthaltende Substrat eine Silizium- und/oder Siliziumdioxidquelle für die C-S-H-Phase ist.

Dieses Silicium enthaltende Substrat wird im Folgenden als erfindungsgemäße Einheit oder Vorrichtung bezeichnet.
Erfindungsgemäß bezeichnet der Begriff "Schicht" einen molekularen Monolayer. Ein einer Ausführung kann eine Schicht auch mehrere Monolayer enthalten.

In unterschiedlichen Varianten der vorliegenden Erfindung kann die erfindungsgemäße Einheit 1, 2, 3, 4, 5, 6, 7, 8, 9, 10 oder mehrere Schichten Kalziumphosphat oder Kalziumarsenat aufweisen.
Möglich sind auch Mischschichten aus Kalziumphosphat und Kalziumarsenat oder auch Schichten enthaltend oder bestehend aus den o.g. Kalziumphosphat- bzw. Kalziumarsenat-Hydraten.

Das beschichtete Substrat weist in situ gebildetes Kalziumphosphat oder Kalziumarsenat oder das entsprechende Hydrat, beziehungsweise eine in situ gebildete Kalziumphosphat (Ca3(PO4)2), Kalziumarsenat (Ca3(AsO4)2), Kalziumphosphat- Kalziumarsenat-Misch-Schicht oder die entsprechenden Hydrate auf.
Einzige Kalzium Quelle ist eine C-S-H-Phase (Kalzium-Silikat-Hydrat-Phase). Diese wurde vorher in situ auf dem Substrat, bevorzugt als C-S-H-Schicht gebildet.
Silizium- und/oder Siliziumdioxidquelle für die C-S-H-Phase ist das Silizium enthaltende Substrat.

Im Sinne der Erfindung bedeutet in situ "an Ort und Stelle", d.h. sowohl das gebildete Kalziumphosphat (Ca3(PO4)2), Kalziumarsenat (Ca3(AsO4)2) als auch die C-S-H-Phase wird durch chemische Reaktionen an der jeweiligen Oberfläche der Substrats gebildet oder unmittelbar nach Bildung dort angelagert beziehungsweise angehaftet.

In einer Ausführung der vorliegenden Erfindung liegt das Kalziumphosphat oder Kalziumarsenat in einer Hydroxylapatit-ähnlichen Struktur vor.

Erfindungsgemäß zeigt eine Hydroxylapatit-ähnliche Struktur dieselbe Kristallstruktur wie Hydroxylapatit. Das Kalziumphosphat oder Kalziumarsenat der erfindungsgemäßen Einheit kristallisiert im hexagonalen Kristallsystem, bevorzugt Hexagonalbipyramidal (6/m nach *Hermann-Mauguin*), insbesondere in der Raumgruppe P 63/m (Raumgruppe Nr 176) mit zwei Formeleinheiten pro Elementarzelle. In einer Ausführung liegt das Kalziumphosphat oder Kalziumarsenat der erfindungsgemäßen Einheit in der o.g. Kristallstruktur vor. Da die Schicht aus Kalziumphosphat oder Kalziumarsenat erfindungsgemäß nicht ausreichend dick sein muss um vollständige Elementarzellen aufzuweisen, wird die Kristallstruktur im Sinne der Erfindung als Hydroxylapatit-ähnlich bezeichnet.

Das Silizium enthaltende Substrat ist eine Silicium- und/oder Siliciumdioxid-Quelle. Erfindungsgemäß bedeutet dies, dass durch äußere Einwirkung, also durch physikalische Kraft oder aufgrund chemischer Reaktionen Silicium und/oder Siliciumdioxid aus dem Silizium enthaltenden Substrat herausgelöst und/oder freigesetzt wird. In einer Alternative wird dabei Silicium aus dem Substrat herausgeätzt, so dass das Substrat eine raue Oberfläche aufweist.

In einer weiteren Ausführung der vorliegenden Erfindung enthält die erfindungsgemäße Einheit eine Siliciumdioxid-Schicht, die bevorzugt zwischen dem Silicium enthaltenden Substrat und der Kalziumphosphat- und/oder Kalziumarsenat-Schicht angeordnet ist.

Das Silicium enthaltende Substrat ist ausgewählt aus der Gruppe bestehend aus Silicium-Wafer, Silicium-Pulver oder Siliciumdioxid enthaltende Materialien, bevorzugt Glas. Wesentlich für das Substrat ist, dass Silicium und/oder Siliciumdioxid daraus freigesetzt werden kann.

Gegenstand der vorliegenden Erfindung ist auch ein Verfahren zur Herstellung der erfindungsgemäßen Einheit umfassend die Schritte oder bestehend aus den Schritten:
a) Aktivierung eines Silicium enthaltenden Substrats ausgewählt aus der Gruppe bestehend aus Silicium-Wafer, Silicium-Pulver oder Siliciumdioxid enthaltende Materialien, wobei das Silizium enthaltende Substrat in Schritt
   a1) in Kontakt mit einer Lösung aus H2O2 und H2SO4 gebracht wird
      und
   a2) das Produkt aus a1) mit H2O gespült wird;
b) in Kontakt bringen des Silicium enthaltenden Substrats aus Schritt a) mit einer wässrigen Kalziumhydroxid-Lösung (Ca(OH)2), wobei auf dem Silizium enthaltenden Substrat mindestens eine C-S-H-Schicht gebildet wird;
c) in Kontakt bringen des Silicium enthaltenden Substrats aus Schritt b) mit einer wässrigen Phosphat- und/oder Arsenat-Lösung.

Die Aktivierung gemäß Schritt a) erfolgt mit einer sog. "Piranha-Lösung". Hierzu wird im Teilschritt a1) das Silicium enthaltende Substrat mit der Piranha-Lösung in Kontakt gebracht, z.B. gespült, bevorzugt eingetaucht.
Erfindungsgemäß handelt es sich bei der Piranha-Lösung um eine Mischung aus H2O2 in einer Konzentration von 30 Gew.% und H2SO4 in einer Konzentration von 96 %, im Verhältnis 1:3. Das Substrat wird für die Aktivierung bei erhöhter Temperatur, bevorzugt bei 50 - 100°C, besonders bevorzugt bei 60 - 90°C, insbesondere bei 80°C für 10 - 60 Minuten, bevorzugt 20 - 50 Minuten, insbesondere 30 Minuten in Kontakt gebracht.

Im zweiten Teilschritt der Aktivierung a2) wird das Substrat gründlich mit Wasser gereinigt, also darin eingetaucht, bevorzugt gespült. Das hierzu benutzte Wasser ist entsalzt, d.h. es handelt sich um bidestilliertes H2O oder Wasser, welches über einen lonentauscher entsalzt wurde.

In dem zweiten Schritt b) wird das Produkt aus Schritt a), also das aktivierte Silicium enthaltende Substrat, mit einer wässrigen Ca(OH)2-Lösung in Kontakt gebracht, d.h. damit gespült oder darin eingetaucht.

Bei der Kalziumhydroxid-Lösung handelt es sich um eine konzentrierte Ca(OH)2-Lösung, bevorzugt eine gesättigte Lösung. Das aktivierte Substrat wird bei Raumtemperatur, also bei 20 - 30°C, bevorzugt bei 25°C, für 6 - 24 Stunden, bevorzugt 8-16 Stunden, besonders bevorzugt für 12 Stunden, mit der Kalziumhydroxid-Lösung in Kontakt gebracht.
Bei Kontakt mit der Ca(OH)2-Lösung werden Silicium-Atome oder Siliciumdioxid-Moleküle aus dem Substrat freigesetzt und gehen in Form von Si(OH)4, (Kieselsäure) in Lösung.
Demgemäß handelt es sich bei dem Silizium enthaltenden Substrat um eine Silicium und/oder Siliciumdioxid-Quelle.

Die Kieselsäure kondensiert in einer Folgereaktion mit Kalziumhydroxid zu Kalzium-Silikat CaSi3O9 oder dem entsprechenden Hydrat.

Im Verfahrensschritt b) sollte die Anwesenheit von Kohlenstoffdioxid CO2 vermieden werden, um die Reaktion von Kalziumhydroxid mit Kohlenstoffdioxid zu Kalziumkarbonat zu unterdrücken.

Die Anwesenheit von CO2 in Schritt b), insbesondere während der Reaktion von Kalziumhydroxid mit Kieselsäure kann z.B. durch kontinuierliches Spülen der Lösung bzw. des Gefäßes, in welchem sich das aktivierte Substrat und die Kalziumhydroxid-Lösung befindet, mit Argon, Stickstoff oder einem anderen Schutzgas unterbunden werden.

In einer Alternative wird das erfindungsgemäße Verfahren, insbesondere Schritt b), in einer Durchflusszelle durchgeführt. Das Silicium enthaltendes Substrat, zum Beispiel ein Silicium-Wafer, insbesondere ein aktivierter Silicium-Wafer wird in die Durchflusszelle eingesetzt. Bei der Durchflusszelle handelt es sich um ein formstabiles Gehäuse, bevorzugt aus Teflon, mit Teflon beschichtetes formstabiles Material, Metall, insbesondere Edelstahl, welches gegenüber den verwendeten und auftretenden Lösungen wie Kalziumhydroxid, Kieselsäure sowie weitere oben erwähnten Reagenzien inert ist. Wesentlich ist ferner, dass die verwendeten Materialien keine Silicium-Quellen darstellen.
Die Durchflusszelle ist ein geschlossenes Gebilde mit drei Öffnungen, wobei es sich um einen Zulauf und einen Ablauf für die die mit Schutzgas gespülte Kalziumhydroxid-Lösung handelt, durch die dritte Öffnung wird die Durchflusszelle mit dem Substrat bestückt. Diese Öffnung ist bevorzugt gasdicht verschließbar, zum Beispiel mit einem verschraubbaren Deckel, um Eindringen von CO2 zu vermeiden und ggf. ein unkontrolliertes Austreten des Schutzgases. Durch Zu- und Ablauf wird die Durchflusszelle mit Schutzgas gespülter Kalziumhydroxid-Lösung versorgt.

Gegenstand der vorliegenden Offenbarung ist somit auch eine Durchflusszelle mit Zu- und Ablauf für ein Fluid, bevorzugt eine mit inertem Schutzgas gespülte Lösung, ggf. verschließbare, bevorzugt gasdicht verschließbare Öffnung für die Bestückung der Durchflusszelle, wobei die Durchflusszelle aus einem gegenüber den eingesetzten Reagenzien und sich in der Zelle bildenden Produkten inertem Material hergestellt ist oder eine Beschichtung im Inneren der Zelle mit einem inerten Material aufweist. Das System der Durchflusszelle einschließlich Leitungen und Pumpe sowie Schutzgas-Zufuhr kann gasdicht abgeschlossen sein. In einer Alternative kann es sich auch um ein offenes System, also eine Durchflusszelle einschl. Zu- und Ablauf sowie Gefäß mit Kalziumhydroxid-Lösung handeln, insbesondere ist das Gefäß mit der mit inertem Schutzgas gespülten Lösung nicht gasdicht von der Umgebung abgetrennt, sondern in unmittelbarem Kontakt zur Atmosphäre.

Die Reaktion in Schritt b) wird bei einem pH-Wert von 10 - 14, bevorzugt 11 - 13, besonders bevorzugt 11,5 - 12,5, insbesondere pH 12, durchgeführt. Im Wesentlichen wird der pH-Wert durch die Konzentration der Ca(OH2)-Lösung bestimmt, und liegt bei einer gesättigten Lösung bei ca. pH 12.

Das durch die Reaktion von Kieselsäure mit Kalziumhydroxid gebildete Kalzium-Silikat liegt bevorzugt als Hydrat vor. Es handelt sich dabei um eine sog. C-S-H-Phase (Kalzium-Silikat-Hydrat-Phase).

Diese ist an der Oberfläche des Silicium enthaltenden Substrats angeordnet und ist wie folgt charakterisiert: es liegt ein Kalzium:Silizium-Verhältnis von 1:1 vor und die C-S-H-Phase weist eine hohe Homogenität auf.
Bei einer Durchführung des Reaktionsschritts b) bei 60°C wird ein Verhältnis von Kalzium:Silicium von 2:1 erreicht, bei 120°C (und entsprechender Druckerhöhung in einem gasdichten System bzw. Apparatur) ein Verhältnis von 3:1.

Die sich zunächst bildende C-S-H-Phase (z.B. wenn das aktivierte Substrat bei Raumtemperatur und Normaldruck für 12 Stunden in eine Kalzium-Hydroxid-Lösung eingetaucht wird) ist ein homogener Monolayer von ca. 3 nm.
Bei höherer Temperatur und/oder verlängerter Reaktionszeit können auch mehrere Schichten Kalzium-Silikat-Hydrat gebildet werden. Bei höheren Temperaturen werden mehrere Layer Kalzium-Silikat-Hydrat gebildet, so erhöht sich die Anzahl der Layer bei einer Temperatur von 60°C um Faktor ca. 10, und bei einer Temperatur um 120°C um Faktor ca. 100.

Erfindungsgemäß enthält die C-S-H-Phase mindestens eine Schicht, also einen Monolayer an Kalzium-Silikat.

In einer Ausführung des erfindungsgemäßen Verfahrens wird somit in Schritt b) auf dem Silizium enthaltenden Substrat mindestens eine C-S-H-Schicht gebildet.

In einer weiteren Ausführung der vorliegenden Erfindung liegt in dem Produkt von Schritt b), in der C-S-H-Phase das Verhältnis von Kalzium zu Silizium zwischen 1:1 bis 3:1.

In einer Alternative des erfindungsgemäßen Verfahrens wird b) nicht unter Schutzatmosphäre durchgeführt. Dann erfolgt nach der Bildung der C-S-H-Phase ein zusätzlicher Schritt, in welchem das Produkt aus Schritt b) mit UV bestrahlt wird und/oder erhitzt wird, um so Kalziumkarbonat zu zerstören und eine homogene C-S-H-Phase zu erhalten.
In einer Alternative wird das Produkt aus Schritt b) auf 500 - 1.000°C, bevorzugt 600 - 900, besonders bevorzugt 700 - 800°C erhitzt.
In einer Alternative erfolgt das Erhitzen mittels einer direkten adaptiven Ohm'schen Heizung. Bevorzugt wird ein Thermoelement (Typ K) direkt in die Heizung eingebunden, so dass die aktuelle Temperatur und die Heizrate verfolgt werden können und somit der Prozessablauf optimal geregelt wird. In einer weiteren Alternative wird unmittelbar, online mittels Infrarotspektroskopie der Gehalt an Karbonat verfolgt. Erfindungsgemäß erfolgt in dieser Alternative bei der online Infrarotspektroskopie die qualitative und/oder quantitative Bestimmung bzw. Analyse des Substrats auf Carbonate unmittelbar und/oder gleichzeitig mit Temperaturänderung.

In einer weiteren Alternative wird Schritt b) unter Schutzatmosphäre durchgeführt und zusätzlich erfolgt der oben beschriebene Schritt zur Eliminierung von Karbonaten.

Erfindungswesentlich bei Schritt b) ist sicherzustellen, dass nur Kalzium-Silikate und keine Karbonate in der im Schritt b) gebildeten C-S-H-Phase vorhanden sind.

Bei dem Produkt aus Schritt b) handelt es sich um ein stabiles, insbesondere Luftstabiles Substrat, welches eine einfache Handhabung gewährleistet.

In einer Ausführung des erfindungsgemäßen Verfahrens werden im Schritt c) bei Kontakt des Produkts aus Schritt b) mit einer wässrigen Phosphat- und/oder Arsenat-Lösung bzw. Phosphat und/oder Arsenat enthaltenden Lösung in einem ersten Schritt c1) in der C-S-H-Phase Kalzium-Ionen gegen Protonen aus der wässrigen Lösung ausgetauscht.
Die aus der C-S-H-Phase freigesetzten Ca2+-lonen reagieren in einem zweiten Teilschritt c2) mit den Phosphat- und/oder Arsenat-Ionen und haften an der Oberfläche des Substrats in Form von Kalziumphosphat und/oder Kalziumarsenat und bilden eine Kalziumphosphat- Kalziumarsenat- oder Kalziumphosphat-Kalziumarsenat-Misch-Schicht.

Durch Herauslösen der Ca2+-lonen wird aus der C-S-H-Phase ein Silikat, bevorzugt Silikat-Hydrat-Schicht, die sich zwischen dem Substrat und der Kalziumphosphat- Kalziumarsenat- oder Kalziumphosphat- Kalziumarsenat-Misch-Schicht befindet. In einer Alternative werden nicht alle Ca2+-lonen herausgelöst, so dass auch eine C-S-H-Phase noch vorliegt.

Als Produkt des erfindungsgemäßen Verfahrens und von Schritt c) wird die erfindungsgemäße Einheit gebildet.
Vorteil der vorliegenden Erfindung ist, dass die erfindungsgemäße Einheit in Schritt c) unabhängig vom pH gebildet wird.

Gegenstand der vorliegenden Erfindung ist auch ein Silicium enthaltendes Substrat ausgewählt aus der Gruppe bestehend aus Silicium-Wafer, Silicium-Pulver oder Siliciumdioxid enthaltende Materialien, beschichtet mit einer oder mehreren Schichten, wobei mindestens eine Schicht Kalziumphosphat (Ca3(PO4)2), Kalziumarsenat (Ca3(AsO4)2), Kalziumphosphat- Kalziumarsenat-Misch-Schicht oder die entsprechenden Hydrate enthält oder daraus besteht, welches das Produkt des oben beschriebenen Verfahrens ist und wobei das Kalziumphosphat oder Kalziumarsenat oder das entsprechende Hydrat in situ gebildet ist mit einer C-S-H-Phase (Kalzium-Silikat-Hydrat-Phase) als Kalzium-Quelle und das Silizium enthaltende Substrat eine Silizium- und/oder Siliziumdioxidquelle für die C-S-H-Phase ist.

Gegenstand der vorliegenden Erfindung ist somit die oben beschriebene erfindungsgemäße Einheit.
Ein weiterer Gegenstand der vorliegenden Erfindung ist ein Silicium enthaltendes Substrat ausgewählt aus der Gruppe bestehend aus Silicium-Wafer, Silicium-Pulver oder Siliciumdioxid enthaltende Materialien, beschichtet mit einer oder mehreren Schichten, wobei mindestens eine Schicht Kalziumphosphat (Ca3(PO4)2), Kalziumarsenat (Ca3(AsO4)2), Kalziumphosphat- Kalziumarsenat-Misch-Schicht oder die entsprechenden Hydrate enthält oder daraus besteht; wobei das Kalziumphosphat oder Kalziumarsenat oder das entsprechende Hydrat in situ gebildet ist mit einer C-S-H-Phase (Kalzium-Silikat-Hydrat-Phase) als Kalzium-Quelle und das Silizium enthaltende Substrat eine Silizium- und/oder Siliziumdioxidquelle für die C-S-H-Phase ist;
hergestellt in einem Verfahren umfassend die Schritte oder bestehend aus den Schritten:
a) Aktivierung eines Silicium enthaltenden Substrats ausgewählt aus der Gruppe bestehend aus Silicium-Wafer, Silicium-Pulver oder Siliciumdioxid enthaltende Materialien, wobei das Silizium enthaltende Substrat in Schritt
   a1) in Kontakt mit einer Lösung aus H2O2 und H2SO4 gebracht wird
      und
   a2) das Produkt aus a1) mit H2O gespült wird;
b) in Kontakt bringen des Silicium enthaltenden Substrats aus Schritt a) mit einer wässrigen Kalziumhydroxid-Lösung (Ca(OH)2), wobei auf dem Silizium enthaltenden Substrat mindestens eine C-S-H-Schicht gebildet wird;
c) in Kontakt bringen des Silicium enthaltenden Substrats aus Schritt b) mit einer wässrigen Phosphat- und/oder Arsenat-Lösung;
bevorzugt enthaltend oder bestehend aus den oben beschriebenen Schritten mit den Teilschritten
c1) Ausgetauschen der Kalziumionen der C-S-H-Phase gegen Protonen
   und
c2) Reaktion der Kalziumionen mit den Phosphat- und/oder ArsenatIonen
und ggf. dem oben beschriebenen Schritt zur Eliminierung von Karbonat.

Weiterer Gegenstand ist ein Verfahren zur Herstellung eines beschichteten Substrats, einer erfindungsgemäßen Einheit, wie oben beschrieben, dadurch gekennzeichnet, dass die Kalziumphosphat-, Kalziumarsenat- oder Kalziumphosphat- Kalziumarsenat-Misch-Schicht in situ auf dem Silizium enthaltenden Substrat gebildet wird mit eine C-S-H-Phase als Kalzium Quelle und dem Substrat als Silizium-Quelle für die C-S-H-Phase.

Die besonders gute Haftung der gebildeten Kalziumphosphat-, Kalziumarsenat-, oder Mischschichten aufgrund der in situ Bildung kann z.B. durch einen sog. Peel-Test überprüft werden, bei welchem eine Probe mit der Kalziumphosphat- oder Kalziumarsenatschicht nach oben in eine Haltung eingespannt wird, ein Streifen eines Klebebandes (bevorzugt magic-tape) auf die Probe blasenfrei angedrückt und geklebt wird und das Klebeband in einem Winkel von 90° von der Probe abgezogen wird. Zur Überprüfung können einerseits das abgezogene Klebeband auf Rest der erfindungsgemäßen Einheit überprüft werden, andererseits kann die Phosphatschicht spektroskopisch oder über die Bestimmung der dielektrischen Funktionen, z.B. über eine Widerstandsmessung, bestimmt werden.

Eine Ausführung betrifft die Regeneration der erfindungsgemäßen Einheit, d.h. dass mit einer Kalziumphosphat-, Kalziumarsenat- oder Mischschicht beschichtetem Substrat wird regeneriert, also wieder in ein Substrat ohne Phosphat- oder Arsenatschicht, also in ein Produkt gemäß erfindungsgemäßem Verfahren b) überführt, das eine C-S-(Kalzium-Silikat)-Phase bzw. -Schicht als äußerste Schicht aufweist. In einer Alternative der Erfindung erfolgt die Regeneration durch Erhitzen des Substrats auf ca. 1.000°C. Bei Kontakt mit Wasser bildet sich aus der C-S-Phase eine C-S-H-Phase.

Gegenstand der Erfindung ist ferner eine erfindungsgemäße Einheit, ein mit mindestens einer, in situ gebildeten, Kalziumphosphat-, Kalziumarsenat- oder Kalziumphosphat- Kalziumarsenat-Misch-Schicht beschichtetes Substrat hergestellt in einem hier beschriebenen (erfindungsgemäßen) Verfahren.

Als einzige Kalziumquelle für die Kalziumphosphatschicht dient dabei die C-S-H-Phase, wobei einzige Siliziumquelle für diese C-S-H-Phase das Silizium enthaltende Substrat über die zuvor aufgetragene Silikatschicht dient. Sowohl die C-S-H-Phase bzw. Schicht als auch die sich darauf bildende Kalziumphosphat-, Kalziumarsenat- oder Kalziumphosphat-Mischschicht werden in situ aus den oben beschriebenen Quellen gebildet. Sofern nicht alle Kalziumionen aus der C-S-H-Phase zur Bildung der darauf liegenden Kalziumphosphat- oder Arsenatschicht benötigt werden, bleibt ein Rest der C-S-H-Phase bestehen. Aufgrund des Herauslösens bzw. Austauschs der Kalziumionen gegen Protonen (H+) bleibt eine Silikat-, bevorzugt Silikat-Hydrat-Phase auf dem Substrat unterhalb der Kalziumphosphat- und/oder Arsenat- bzw. Mischschicht.

In einer Ausführung enthält die C-S-Phase, C-S-H-Phase, die Silikat-Schicht, bevorzugt Silikat-Hydrat-Schicht und/oder die Kalziumphosphat- Kalziumarsenat- oder Kalziumphosphat- Kalziumarsenat-Misch-Schicht kein elementares Kalzium und/oder Phosphor.

Vorteilhaft ist die erfindungsgemäße Herstellung eines luftstabilen und gegen physikalische Einwirkungen stabilen erfindungsgemäßen beschichteten Substrats der erfindungsgemäßen Einheit.

Gegenstand der vorliegenden Erfindung ist auch die Verwendung der erfindungsgemäßen Einheit zur quantitativen Phosphat- und/oder ArsenatBestimmung.

Bisher ist kein quantitatives (Online-)Bestimmungsverfahren für Phosphat (Ortho-Phosphat) und/oder Arsenat (Ortho-Arsenat) bekannt. Erfindungsgemäß wird bei der Online-Bestimmung ein Silicium enthaltendes Substrat mit einer C-S-H-Phase hergestellt in dem erfindungsgemäßen Verfahrensschritt b) in eine Phosphat- und/oder Arsenat-haltige wässrige Lösung getaucht und die Bildung von der Kalziumphosphat- und/oder Kalziumarsenat- und/oder -Misch-Schicht unmittelbar in dieser Lösung qualitativ und/oder quantitativ bestimmt bzw. analysiert, bevorzugt mittels IR- oder FTIR-Spektroskopie.
Vorteilhaft wird die erfindungsgemäße Einheit nach der Messung auf 1000 Grad Celsius erhitzt, regeneriert sich so und steht für die nächste Messung zur Verfügung.

Ferner besteht auch Bedarf einer quantitativen Phosphat- und/oder ArsenatBestimmung, bevorzugt aus Abwässern, die ohne aufwendige Probeentnahme und/oder Probevorbereitung mit einfachen Mitteln möglich ist.
In einer Alternative werden hierzu die erfindungsgemäßen Einheiten eingesetzt, in dem ein Silicium enthaltendes Substrat mit einer C-S-H-Phase hergestellt in dem erfindungsgemäßen Verfahrensschritt b) mit einer Phosphat- und/oder Arsenat-haltige Lösung in Kontakt gebracht wird, die Bildung von Kalziumphosphat und/oder Kalziumarsenat abgewartet wird, bevorzugt bis zur Beendigung der Reaktion (Einstellung eines chemischen Gleichgewichts), also die Bildung der erfindungsgemäßen Einheit abgewartet wird.
Zur quantitativen Bestimmung des Phosphat- und/oder Arsenat-Gehalts kann die erfindungsgemäße Einheit anschließend z.B. spektroskopisch, bevorzugt mittels IR-Spektroskopie, FTIR-Spektroskopie vermessen werden.
Vorteilhaft bei dieser Art der Bestimmung ist die Tatsache, dass das Silicium enthaltende Substrat als Silicium-Wafer, Glas und/oder Silicium-Pulver fixiert auf einem bevorzugt durchsichtigen Träger, kein Hindernis für die IR-Spektroskopie darstellt.
Im Falle der Verwendung von Silicium-Pulver kann bei der Vermessung der erfindungsgemäßen Einheit das gestreute Licht, als die diffuse Reflektion, gemessen werden, um so eine quantitative Phosphat- und/oder ArsenatBestimmung durchzuführen.
Im Falle der Verwendung von Glas als Silicium enthaltendes Substrat kann der reflektierte Strahl vermessen werden.

Die erfindungsgemäße Verwendung ermöglicht ferner die Unterscheidung von Ortho-Phosphaten und/oder -Arsenaten und dem Gesamtgehalt an Phosphaten und/oder Arsenaten in der Lösung, insbesondere ohne eine vorherige Behandlung der Lösung mit Chemikalien oder anderen Aufarbeitungen.

Somit ist Gegenstand der vorliegenden Erfindung auch ein Verfahren zur Bestimmung des Ortho-Phosphats und/oder -Arsenat-Gehalts einer Lösung und/oder des Gesamtgehalts an Phosphaten und/oder Arsenaten dieser Lösung. Erfindungsgemäß werden hierzu die Silicium enthaltenden Substrate hergestellt in Schritt b) des erfindungsgemäßen Verfahrens unterschiedlich lange mit einer Phosphat- und/oder Arsenat enthaltenden Lösung gespült oder darin eingetaucht. Aus dem Vergleich der so hergestellten erfindungsgemäßen Einheiten, die unterschiedlich lange in Kontakt mit einer Phosphat und/oder Arsenat-Lösung waren, lässt sich eine Aussage über die Menge der Phosphate und/oder Arsenate machen sowie über die Art der Phosphate und/oder Arsenat-Ionen, die als Kalzium-Salze ausgefallen sind.

In einer Alternative werden Silicium enthaltende Substrate in Schritt b) mit einer genau definierten Menge an Kalzium-Ionen beladen, also eine genau definierte Kalzium-Silikat-Schicht aus dem Substrat hergestellt.
Diese Substrate werden im Schritt c) mit einer Phosphat- oder Arsenat-Lösung mit genau definierter Konzentration an Phosphat und/oder Arsenat-Ionen in Kontakt gebracht.
Zur quantitativen Bestimmung von Phosphat und/oder Arsenat einer Lösung sind folgende Alternativen möglich:
- In Kontakt bringen der gleichen Substrate hergestellt in Schritt b) mit Arsenat und/oder Phosphat-Lösungen mit genau definierter, aber jeweils unterschiedlicher Konzentration an Phosphat und/oder Arsenat;
- In Kontakt bringen der gleichen Substrate aus Schritt b) mit einer Phosphat- und/oder Arsenat-Lösung genau definierter Konzentration an Phosphat und/oder Arsenat über unterschiedliche Zeiträume und
- Kombination dieser beiden Alternativen.

Durch Vergleich der IR und/oder FTIR-Spektren der in Schritt b) hergestellten Substrate vor und nach in Kontakt bringen mit der Phosphat- und/oder Arsenat-Lösung lassen sich zeitabhängige Kalibrierungsfunktionen erstellen, die der jeweils genau definierten und vorher eingestellten Phosphat- und/oder Arsenat-Konzentration der Lösung entsprechen. Mittels dieser Kalibrierungsfunktionen können anschließend durch in Kontakt bringen von gleichen Substraten hergestellt in Schritt b) (gleich bezüglich der Konzentration an Kalzium in der C-S-H-Phase) die Konzentration von Phosphat und/oder Arsenat in beliebigen Lösungen bestimmen, bevorzugt online.

Insbesondere erfindungsgemäße Einheiten auf Basis von Silizium-Wafer, also bei denen das Silicium-enthaltene Substrat ein Siliciumwafers ist, stellen kompakte, leicht transportierbare und unmittelbar zur verwendende Einheiten dar. Auch die Silicium-enthaltenen Substrate hergestellt im erfindungsgemäßen Verfahren als Produkt des Schritts b) zeigen diese vorteilhaften Eigenschaften.

Weiterer Gegenstand der vorliegenden Erfindung ist die Verwendung der erfindungsgemäßen Einheit zur Isolierung von Phosphat und/oder Arsenat aus wässrigen Lösungen.

Bisher sind im Wesentlichen zwei Möglichkeiten bekannt, um Phosphor und/oder Arsenat aus wässrigen Lösung zu entfernen:
Die biologische Isolierung von Phosphor, insbesondere in Form von Phosphaten und/oder Arsen, bevorzugt in Form von Arsenat bzw. deren Elimination aus wässrigen Lösung in einem biologischen Verfahren mittels Mikroorganismen; des Weiteren ist eine chemische Phosphat- bzw. Arsenat-Fällung mit z.B. Eisen und/oder Aluminium-Salze als Fällmittel bekannt.
Nachteil der Fällungsverfahren ist die Erhöhung der Salzkonzentration in der wässrigen Lösung, also insbesondere in den Abwässern. Außerdem ist in den letzten Jahren aufgrund der immer aufwendigeren Reinigung von Abwässern eine Erhöhung der Preise für Fällungsmittel deutlich geworden. Bei der Fällung von Phosphaten und/oder Arsenaten mit Eisen- oder Aluminiumsalzen, oder Kalkmilch entstehen schwer lösliche Metall-Phosphate und/oder Arsenate, die ausgefällt werden. Aus diesen schwerlöslichen Metall-Phosphaten- und/oder Arsenaten ist Phosphor oder Arsen nur durch aufwendige Methoden wie z.B. Leaching mit hohem Einsatz an Chemikalien in eine dem Recycling zugehende Form zu überführen. Durch die ausgefällten Phosphat- und/oder Arsenat-Salze wird außerdem das Schlammvolumen erhöht. In der Praxis wird deshalb meistens eine Kombination aus biologischer und chemischer Elimination eingesetzt, um so einerseits das Schlammvolumen zu verringern, und andererseits auch den Verbrauch an Fällmitteln zu minimieren.

In einer Ausführung wird bei der Verwendung der erfindungsgemäßen Einheit zur Isolierung von Phosphaten und/oder Arsenaten aus wässriger Lösung das Produkt von Schritt b) des erfindungsgemäßen Verfahrens in eine Lösung, z.B. und bevorzugt Abwasser, getaucht oder damit gespült. In dieser Lösung findet Schritt c) des erfindungsgemäßen Verfahrens statt, so dass als Endprodukt die erfindungsgemäße Einheit gebildet wird. Diese kann dann aus der Lösung (Abwasser) entfernt werden und ggf. weiterverwendet werden.
Insbesondere bei der Aufreinigung von Abwässern ist bevorzugt als Silizium enthaltendes Substrat Silizium-Pulver, ggf. fixiert auf einen Träger, zu verwenden.

Vorteilhaft bei den oben beschriebenen Verwendungen ist insbesondere die Tatsache, dass die Bildung der mindestens einen Kalzium-Phosphat und/oder - Arsenat- und/oder -Misch-Schicht bei der Herstellung der erfindungsgemäßen Einheit unabhängig vom pH der Phosphat- bzw. Arsenat-Lösung ist.

Durch die erfindungsgemäße Schichtabfolge muss Abwasser vor der Isolierung von Phosphat und/oder Arsenat keiner vorangehenden Aufreinigung bedarf, weder zur Analyse noch zur Isolierung der Stoffe. Dies vermeidet einen hohen Aufwand an Zeit und weiteren Stoffen. Insbesondere wird der Einsatz giftiger Stoffe, wie zum Beispiel Schwermetalle, vermieden, wie Molybdänsäure die gemäß DIN bei der bisherigen Phosphat-Bestimmung verwendet wird. Des Weiteren können Phosphat und/oder Arsenat auch aus organischen Lösungen oder Dispersionen isoliert werden.

Die erfindungsgemäßen Einheiten können wie beschrieben regeneriert werden, wodurch sie wieder einsetzbar sind.
Neben Phosphat und/oder Arsenat werden auf den erfindungsgemäßen Einheiten auch organische Stoffe isoliert und dadurch eine bessere Aufreinigung von Abwasser möglich ist. Bei der Regeneration werden diese Stoffe zu CO2 verbrannt.

Gegenstand der vorliegenden Erfindung ist auch die Verwendung der erfindungsgemäßen Einheit als Modellverbindung für Zahnschmelz und/oder Implantate. Hydroxylapatit bildet die Grundlage der Kristallsubstanzen für Knochen und Zähne aller Wirbeltiere. Da in der Natur selten Hydroxylapatit-Kristalle in reiner Form vorkommen, sind sie für die Forschung wenig geeignet, da aufgrund der Verunreinigungen nicht reproduzierbare Ergebnisse entstehen. Hydroxylapatit in Pulverform ist einerseits leicht herzustellen, allerdings für Implantate ungeeignet und nur begrenzt als Modellverbindung zu verwenden.

Die erfindungsgemäßen Einheiten zeigen eine genau definierte Kalziumphosphat-Schicht (oder Kalziumarsenat- oder Kalziumphosphatarsenat-Schicht) auf, die somit für reproduzierbare Ergebnisse als Modellverbindung für Zähne oder Implantate dient. So können mittels der erfindungsgemäßen Einheiten z.B. die Biegsamkeit, pH-Verträglichkeit oder Verträglichkeit mit verschiedenen Klebern sowie Biokompatibilität getestet werde.
Die auf dem erfindungsgemäßen Substrat in einer Ausführung in situ gebildete Hydroxylapatitschicht besitzt eine kristalline Struktur und ähnelt dem menschlichen Zahnschmelz. Unter dem Mikroskop zeigen sich eine raue Oberfläche und poröse Struktur, in die Biomaterialien einwachsen können. Für das Trägermaterial einer Prothese oder eines Implantats eignet sich zum Beispiel eine Titan-Silizium-Legierung, deren Siliziumanteil zur Oberfläche hin zunimmt. Auf diese Weise ist es möglich, an allen Grenzflächen stoffschlüssige Verbindungen zu schaffen: Hydroxylapatit wächst auf der Siliziumoberfläche auf, das Biomaterial wächst in das Hydroxylapatit ein. Kristalline Hydroxylapatitschichten könnten also in Zukunft zur Entwicklung langlebiger und kostengünstiger Prothesen- und Implantatmaterialien beitragen. Zudem bietet ein mit Hydroxylapatit beschichtetes dünnes Siliziumplättchen eine ideale Testoberfläche für die Entwicklung zukünftiger Medizinprodukte.

Weiterer Gegenstand der Erfindung ist die Verwendung der erfindungsgemäßen Einheit zur Herstellung von dotierten Halbleitern, insbesondere für Siliciumwafer als Silicium-enthaltenes Substrat.

Die Herstellung von dotierten Halbleitern ist nach bisherigem Stand der Technik ein relativ aufwendiges Verfahren. Ho et al. (Nature Materials, Vol. 7, 2008) beschreiben ein Verfahren das einen Schritt enthält, in dem ein sogenanntes Capping auf ein Substrat aufgebracht wird, um ein Verflüchtigen der Doping-Elemente beim Erhitzen zu verhindern.
Allgemein wird bisher das sogenannte MLD-Verfahren (Mono-Layer-Doping, Longo et al., Adv. Funct. Mater. 23, 2013) eingesetzt. Nachteil dieses MLD-Verfahren ist, das an der Oberfläche der Silizium-Substrate nur ein Mono-Layer mit Doping-Elementen verfügbar ist.

Die erfindungsgemäßen Einheiten können jedoch mehrere Layer, also mehrere Schichten von Kalziumphosphat (oder Kalziumarsenat- oder Kalzium-Phosphat-Arsenat) und somit mehrere Schichten von Doping-Elementen enthalten. Damit wird erfindungsgemäß ein Multi-Layer-Doping erzielt.

Gegenstand der vorliegenden Erfindung ist auch ein Verfahren zur Herstellung von mit Phosphor oder Arsen dotierten Halbleitern, bei welchem die erfindungsgemäße Einheit auf 600 bis 1200 Kelvin, bevorzugt 700 bis 1100, besonderes bevorzugt 800 oder 1050, insbesondere 800 Kelvin erhitzt wird.
In einer Alternative erfolgt das Erhitzen mittels einer direkten adaptiven Ohm'schen Heizung. Bevorzugt wird ein Thermoelement (Typ K) direkt in die Heizung eingebunden, so dass die aktuelle Temperatur und die Heizrate verfolgt werden kann und somit der Prozessablauf optimal geregelt wird.

In einer weiteren Alternative wird unmittelbar, online mittels Bestimmung des Widerstandes des Siliziums der erfindungsgemäßen Einheit die Verteilung von Phosphor und/oder Arsen verfolgt. Erfindungsgemäß erfolgt in dieser Alternative bei der online Messung des Widerstandes die quantitative Bestimmung unmittelbar und/oder gleichzeitig mit Temperaturänderung.

In einer Alternative wird eine homogene Verteilung der Dotierung vermieden. Dies wird insbesondere durch ein kurzes Aufheizen gewährleistet, d.h. die o.g. Temperatur wird über einen Zeitraum von lediglich 0,001 - 30 Sekunden, bevorzugt 0,01 - 20 Sekunden, besonders bevorzugt 0,1 - 10 Sekunden, gehalten.

Das oben beschriebene Verfahren ermöglicht hohe Dotierungsdichten und damit den Bau noch kleinerer Halbleiterbauelemente. Es kommt ohne organische Materialien aus, somit besteht keine Gefahr der Verunreinigung des Halbleiters durch Kohlenstoffatome. Da man keine zusätzliche Schutzschicht auftragen muss, ergibt sich die Möglichkeit zur Kosteneinsparung durch ein vereinfachtes Herstellungsverfahren.

Die Offenbarung wird ferner durch folgende Ausführungen beschrieben:
Ausführung 1: Silizium enthaltendes Substrat beschichtet mit einer oder mehreren Schichten, wobei mindestens eine Schicht Kalziumphosphat (Ca3(PO4)2), Kalziumarsenat (Ca3(AsO4)2), Kalziumphosphat- Kalziumarsenat-Misch-Schicht oder die entsprechenden Hydrate enthält oder daraus besteht.
Ausführung 2: Beschichtetes Substrat nach einer der vorangehenden Ausführungen dadurch gekennzeichnet, dass das Kalziumphosphat oder Kalziumarsenat in einer Hydroxylapatit-ähnlichen Struktur vorliegt.
Ausführung 3: Beschichtetes Substrat nach Ausführung 1 dadurch gekennzeichnet, dass das Silizium enthaltende Substrat eine Silizium- und/oder Siliziumdioxidquelle ist.
Ausführung 4: Beschichtetes Substrat nach einer der vorangehenden Ausführungen dadurch gekennzeichnet, dass es eine Siliziumdioxidschicht (SiO2) enthält.
Ausführung 5: Beschichtetes Substrat nach einem der vorangehenden Ausführungen dadurch gekennzeichnet, dass das Silizium enthaltende Substrat ausgewählt ist aus der Gruppe enthaltend oder bestehend aus: Silizium-Wafer, Silizium-Pulver oder Siliziumdioxid enthaltenden Materialien, bevorzugt Glas.
Ausführung 6: Verfahren zur Herstellung eines Si-Wafers nach einer der Ausführungen 1 - 5 umfassend die Schritte:
   a) Aktivierung eines Silizium enthaltenden Substrats;
   b) in Kontakt bringen des Silizium enthaltenden Substrats aus Schritt a) mit einer wässrigen Kalziumhydroxid-Lösung (Ca(OH)2);
   c) in Kontakt bringen des Silizium enthaltenden Substrats aus Schritt b) mit einer wässrigen Phosphat- und/oder Arsenat-Lösung.
Ausführung 7: Verfahren nach Ausführung 6 dadurch gekennzeichnet, dass in Schritt a) das Silizium enthaltende Substrat in Schritt
   a1) in Kontakt mit einer Lösung aus H2O2 und H2SO4 gebracht wird
      und
   a2) das Produkt aus a1) mit H2O gespült wird.
Ausführung 8: Verfahren nach Ausführung 6 oder 7 dadurch gekennzeichnet, dass Schritt b) unter Ausschluss von Kohlenstoffdioxid durchgeführt wird oder dass aus dem Produkt von Schritt b) Karbonate entfernt werden.
Ausführung 9: Verfahren nach einer der Ausführungen 6 - 8 dadurch gekennzeichnet, dass in Schritt b) auf dem Silizium enthaltenden Substrat mindestens eine C-S-H-Schicht (Kalzium-Silikat-Hydrat-Phase) gebildet wird.
Ausführung 10: Verfahren nach einer der Ausführungen 6 - 9 dadurch gekennzeichnet, dass im Produkt von Schritt b), der C-S-H-Schicht das Verhältnis von Kalzium zu Silizium zwischen 1:1 bis 3:1 liegt.
Ausführung 11: Verfahren nach einer der Ausführungen 6 - 10 dadurch gekennzeichnet, dass in Schritt c) bei Kontakt mit einer wässrigen Phosphat- und/oder Arsenat-Lösung in Schritt
   c1) Kalziumionen der C-S-H-Phase gegen Protonen ausgetauscht wird und in Schritt
   c2) durch Reaktion der Kalziumionen mit den Phosphat- und/oder Arsenatlonen mindesten eine Kalziumphosphat-, Kalziumarsenat- oder Kalziumphosphat- Kalziumarsenat-Misch-Schicht auf dem Silizium enthaltenden Substrat gebildet wird.
Ausführung 12: Verwendung eines beschichteten Substrats nach einer der Ausführungen 1 - 5 oder eines beschichteten Substrats, hergestellt nach einer der Ausführungen 6 - 11 oder des Produkts gemäß Ausführung 6, Schritt b) zur quantitativen Phosphat- und/oder Arsenatbestimmung.
Ausführung 1: Verwendung eines beschichteten Substrats nach einer der Ausführungen 1 - 5 oder eines beschichteten Substrats, hergestellt nach einer der Ausführunen 6 - 11 oder des Produkts gemäß Ausführung 6, Schritt b) zur Isolierung von Phosphat und/oder Arsenat aus wässrigen Lösungen.
Ausführung 14: Verwendung eines beschichteten Substrats nach einer der Ausführungen 1 - 5 oder eines beschichteten Substrats, hergestellt nach einer der Ausführungen 6 - 11 als Modellverbindung für Zahnschmelz und/oder Implantate.
Ausführung 15: Verwendung eines beschichteten Substrats nach einer der Ausführungen 1 - 5 oder eines beschichteten Substrats, hergestellt nach einer der Ausführungen 6 - 11 zur Herstellung von dotierten Halbleitern.

### Beispiele:

### 1. Herstellung der erfindungsgemäßen Einheit

Ein Silizium-Wafer wurde mit Piranha-Lösung bei 80 Grad Celsius für 30 Minuten in Kontakt gebracht, also zur Reinigung und Aktivierung darin eingetaucht. Anschließend wurde der aktivierte Silicium-Wafer gründlich mit entsalztem Wasser gespült.

In einem zweiten Schritt wurde der so aktivierte Silicium-Wafer für 12 Stunden bei 25 Grad Celsius mit einer wässrigen, gesättigten Kalziumhydroxid-Lösung in Kontakt gebracht. Dabei wurden der aktivierte Silicium-Wafer in einer Durchflusszelle fixiert, durch die eine mit Argon gespülte Ca(OH)2-Lösung gleitet wurde, so dass der aktivierte Wafer mit der Kalziumhydroxid-Lösung in dauerndem Kontakt war.

In einem weiteren Schritt wurde der Wafer in der Durchflusszelle mit 1%-iger Kalziumdihydrogenphosphat-Lösung (KH2PO4) mindestens eine Minute gespült.

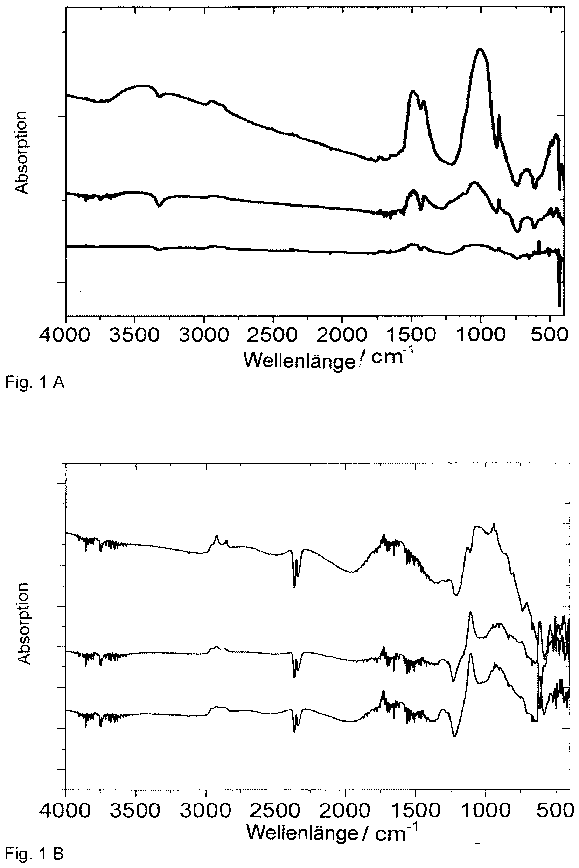

Fig. 1A zeigt die Herstellung der CSH-Phase mittels IR-Spektroskopie. Die Siliciumoxid-Bindung ist bei ca. 1.000 1/cm, die Kalziumoxid-Bindung bei ca. 500 1/cm zu erkennen. Die Bande bei ca. 1.500 1/cm steht für Kalziumkarbonat. Die Spektren wurden - von unten nach oben - mit zunehmender Dauer von Schritt b), also des in Kontaktbringen eines Silicium enthaltenden Substrats mit einer Kalziumdihydroxid-Lösung aufgenommen.

Fig. 1B zeigt die Zunahme der Kalziumphosphat-Schicht im erfindungsgemäßen Gebilde (IR-Spektren von unten nach oben).
Die IR-Spektren wurden von einer erfindungsgemäßen Einheit erstellt, wobei ein Substrat hergestellt in Schritt b) des erfindungsgemäßen Verfahrens unterschiedliche Zeit mit einer 1%-igen Kaliumdihydrogenphosphat-Lösung in Kontakt gebracht wurde. Von unten nach oben ist in den Spektren zu erkennen, dass die Bande der Siliciumoxid-Schwingung bei ca. 1.000 1/cm kleiner wird (in Verbindung mit dem Rückgang des negativen Peak bei ca. 1.200 1/cm der für verlorenes Silicium aus der C-S-H-Phase steht) und im Verhältnis dazu die Bande bei ca. 800 1/cm für die Phosphatbindung größer wird. Dies beweist die Zunahme der Kalziumphosphatschicht.

### 2. Erstellen einer Kalibrierungsfunktion zur Bestimmung von Phosphat

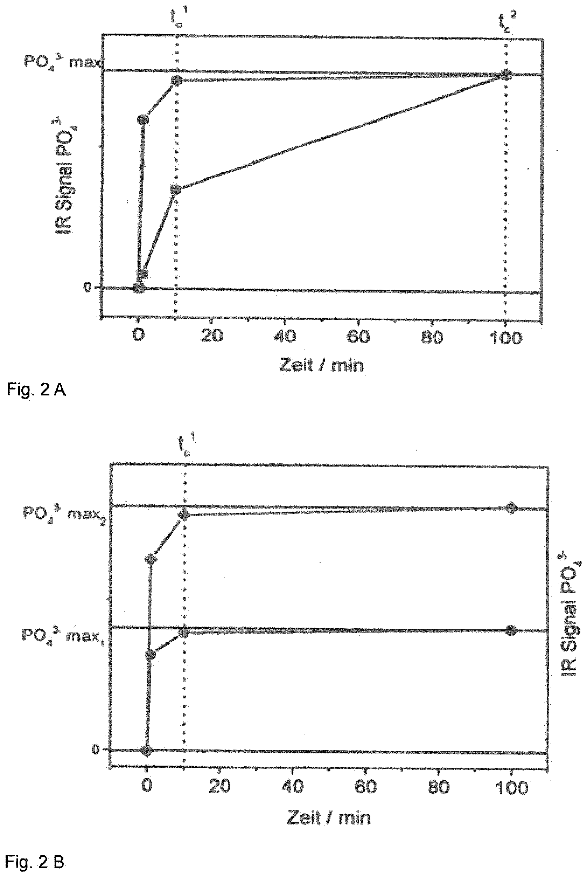

In einer Versuchsreihe wurden mit Kalziumhydroxid-behandelte Silizium-Wafer vorgelegt, die dieselbe Menge an Kalzium enthielten. Ein Teil dieser Wafer wurden mit einer 0,1 %-igen KH2PO4-Lösung in Kontakt gebracht, die zweite Hälfte mit einer 1%-igen KH2PO4-Lösung.
Das Ergebnis ist in Fig. 2 A zu sehen; die Kreise zeigen den Verlauf der Kalziumphosphatbildung, also der erfindungsgemäßen Einheit in der 0,1 %-igen Lösung, die Quadrate in der 1 %-igen Lösung.

In einer zweiten Versuchsreihe wurden zwei Chargen an Silizium-Wafern wie oben beschrieben, mit unterschiedlicher Menge an Kalzium vorgelegt. Die erste Charge war mit einer 1 millimolaren Ca(OH)2-Lösung in Kontakt gebracht worden, die zweite mit einer 10 millimolaren Ca(OH)2-Lösung. Anschließend wurden beide Chargen mit einer 1%-igen KH2PO4-Lösung in Kontakt gebracht. Das Ergebnis ist Fig. 2 B zu entnehmen. Die Kreise stehen für die erste Charge (1 mmol Ca(OH)2), Quadrate für die zweite Charge (10 mmol Ca(OH)2).

### 3. Verwendung der erfindungsgemäßen Einheit zur Bestimmung des Phosphatgehalts einer Lösung

Die erfindungsgemäße Einheit wurde wie in Beispiel 1 beschrieben, hergestellt. Allerdings wurden drei gleiche, mit Kalziumdihydroxid behandelte Wafer eingesetzt.
Vor dem in Kontaktbringen mit der Phosphatlösung wurden die mit Ca(OH)2 behandelten Silicium-Wafer mittels FTIR vermessen. Anschließend wurden die Wafer, die einen identischen Kalzium-Gehalt aufwiesen, für eine Minute, 10 Minuten und 100 Minuten mit der KH2PO4-Lösung in Kontakt gebracht wurden. Im Anschluss wurden die erfindungsgemäßen Einheiten erneut mittels FTIR vermessen.
Aus den Differenzspektren vor und nach dem Kontakt mit der Phosphatlösung und mittels einer (zeitabhängigen) Kalibrierungsfunktion konnte die Phosphatmenge und die Art der Phosphat-Ionen bestimmt werden.

### 4. Verwendung zur Herstellung von dotierten Halbleitern

Ein Substrat hergestellt in Schritt b) und eine erfindungsgemäße Einheit hergestellt jeweils nach Beispiel 1 wurden mittels einer direkten adaptiven Ohmschen Heizung auf 800 Kelvin erhitzt.

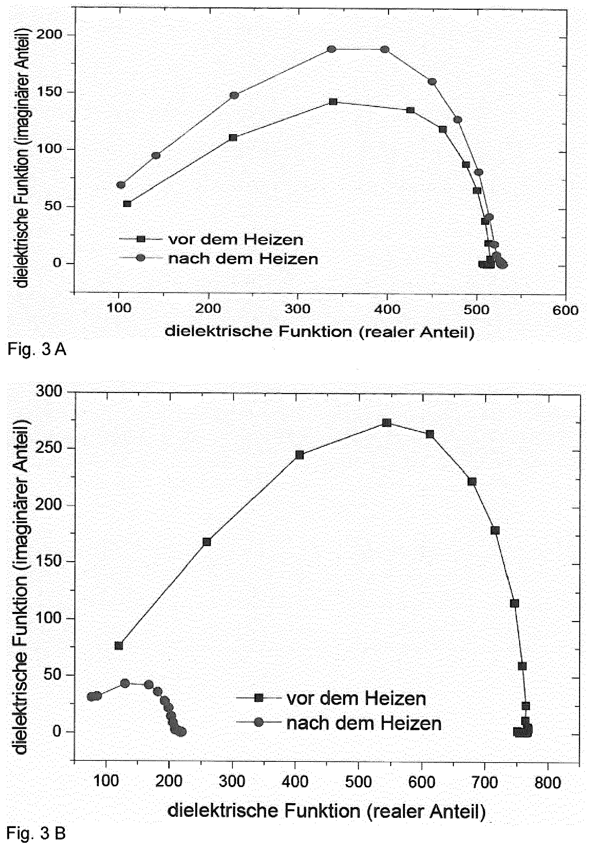

Fig. 3 zeigt die Dotierung der erfindungsgemäßen Einheit mit Phosphor: für Fig. 3 A wurde die dielektrische Funktion vor (Rechtecke) und nach (Ovale) dem Heizen eines Substrats hergestellt in Schritt b) dargestellt;
für Fig. 3 A wurde die dielektrische Funktion der erfindungsgemäßen Einheit dargestellt, also ein Substrat, hergestellt im Teilschritt c), das eine KalziumPhosphatschicht vor dem Heizen aufweist. Dargestellt ist die dielektrische Funktion vor (Rechtecke) und nach (Ovale) dem Heizen der erfindungsgemäßen Einheit.
Nach dem Heizen ist ein deutlicher Unterschied zu erkennen, der Widerstand, dargestellt über die dielektrische Funktion ist deutlich kleiner geworden in Fig. 3 B, während in Fig. 3 A nur ein relativ geringer Unterschied durch das Heizen hervorgerufen wird. Dadurch konnte die Dotierung bewiesen werden.

### 5. Regeneration

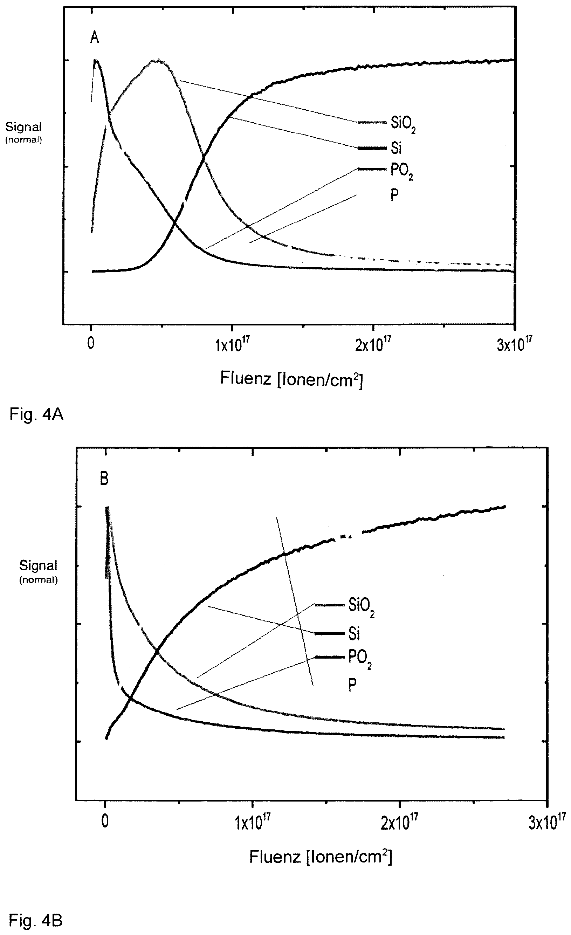

Ein Silikon-Wafer (CZ-Silikon) von einer Größe 3 cm x 1 cm und einer Dicke von 500 µm wurde in einem ersten erfindungsgemäßen Schritt mittels Piranha-Lösung aktiviert. Anschließend wurde das so aktivierte Substrat in 10 ml einer 10 millimolaren Kalziumdihydroxid-Lösung bei 65°C für sechs Stunden getaucht. Dabei wurde die C-S-H-Schicht gebildet. Auf dieses Substrat wurde eine 1 millimolare KH2PO4 (4 µl) aufgetragen. Es erfolgten FTIR-Bestimmungen, sowie ToF-SIMS-Analysen. Eine ToF-SIMS (time of flight secondary ion mass spectrometry) wurde durchgeführt (mit einem gitterlosen reflektronbasierten ToF-SIMS V der Firma ION-TOF GmbH, Münster, DE), ausgerüstet mit einer Bismut-Cluster-Ionenquellen. Die Ergebnisse sind in Fig. 4 A und 4 B zusammengefasst.

Fig. 4 A stellt die Vermessung der erfindungsgemäßen Einheit dar. Si steht für den Silizium-Wafer, SiO2 symbolisiert die Silikatschicht, die nach dem Herauslösen der Kalziumionen auf dem Substrat verbleibt. Der Schnittpunkt dieser beiden Linien symbolisiert die Grenzfläche des Wafers, der sich rechts vom Schnittpunkt befindet, die Silikatschicht links. Darauf ist die Phosphatschicht zu sehen (PO2), die die Phosphoratome (P) enthält. Die erfindungsgemäße Einheit wurde auf 1.000°C für ca. 8 Sekunden erhitzt. Das Ergebnis ist in Fig. 4 B dargestellt. Der Schnittpunkt der SiO2- und Si-Linie symbolisiert wieder die Grenzfläche des Wafers. Deutlich erkennbar ist, dass die Konzentration an Silikat sowie an Phosphat in den Schichten überhalb des Wafers deutlich abgenommen hat, während die Phosphoratome sich fast alle nun in dem Wafer befinden. Damit erfolgte die Regeneration der erfindungsgemäßen Einheit.

### 6. Isolierung von Phosphat aus Abwasser - zur Phosphat-Bestimmung oder zur Aufreinigung:

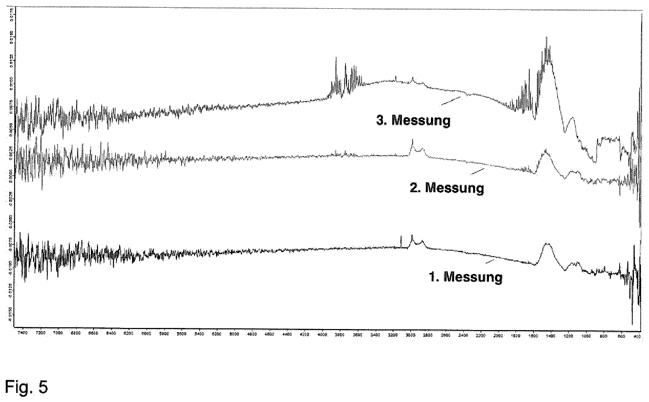

Eine erfindungsgemäß hergestellte Einheit mit einem Wafer als Substrat wurde eingesetzt und mittels IR vermessen. Anschließend wurden darauf 4 µl Abwasser aufgetragen. Es erfolgte eine weitere IR-Messung. Dargestellt in Fig. 5 als Messung 1 ist der Vergleich (Differenz) der beiden IR-Bestimmungen mit und ohne Abwasser.

Anschließend wurde die Einheit wie oben beschrieben bei 1000°C für 8 Sekunden regeneriert.

Der oben beschriebene Vorgang wurde zweimal wiederholt und als zweite und dritte Messung (Differenz-) Messung in Fig. 5 dargestellt.

Deutlich erkennbar ist der Peak für das isolierte Phosphat bei ca. 1100 cm-1; der Carbonat Peak bei 1400 - 1600 cm-1 sowie organische Stoffe bei 2800 - 3000 cm-1.
Die Messungen belegen, dass immer wieder Phosphat aus Abwasser isoliert wurde.

## Patentansprüche

1. Silizium enthaltendes Substrat ausgewählt aus der Gruppe bestehend aus Silicium-Wafer, Silicium-Pulver oder Siliciumdioxid enthaltende Materialien, beschichtet mit einer oder mehreren Schichten, wobei mindestens eine Schicht Kalziumphosphat (Ca3(PO4)2), Kalziumarsenat (Ca3(AsO4)2), Kalziumphosphat- Kalziumarsenat-Misch-Schicht oder die entsprechenden Hydrate enthält oder daraus besteht, **dadurch gekennzeichnet, dass** das Kalziumphosphat oder Kalziumarsenat oder das entsprechende Hydrat in situ gebildet ist mit einer C-S-H-Phase (Kalzium-Silikat-Hydrat-Phase) als Kalzium-Quelle und das Silizium enthaltende Substrat eine Silizium- und/oder Siliziumdioxidquelle für die C-S-H-Phase ist.

2. Verfahren zur Herstellung eines beschichteten Substrats nach Anspruch 1, umfassend die Schritte:
a) Aktivierung eines Silizium enthaltenden Substrats ausgewählt aus der Gruppe bestehend aus Silicium-Wafer, Silicium-Pulver oder Siliciumdioxid enthaltende Materialien, wobei das Silizium enthaltende Substrat in Schritt
a1) in Kontakt mit einer Lösung aus H2O2 und H2SO4 gebracht wird
und
a2) das Produkt aus a1) mit H2O gespült wird;
b) in Kontakt bringen des Silizium enthaltenden Substrats aus Schritt a) mit einer wässrigen Kalziumhydroxid-Lösung (Ca(OH)2), wobei auf dem Silizium enthaltenden Substrat mindestens eine C-S-H-Schicht gebildet wird;
c) in Kontakt bringen des Silizium enthaltenden Substrats aus Schritt b) mit einer wässrigen Phosphat- und/oder Arsenat-Lösung.

3. Verfahren nach Anspruch 3, **dadurch gekennzeichnet, dass** Schritt b) unter Ausschluss von Kohlenstoffdioxid durchgeführt wird oder dass aus dem Produkt von Schritt b) Karbonate entfernt werden.

4. Verfahren nach einem der Ansprüche 2 - 3, **dadurch gekennzeichnet, dass** im Produkt von Schritt b), der C-S-H-Schicht das Verhältnis von Kalzium zu Silizium zwischen 1:1 bis 3:1 liegt.

5. Verfahren nach einem der Ansprüche 2 - 4, **dadurch gekennzeichnet, dass** in Schritt c) bei Kontakt mit einer wässrigen Phosphat- und/oder Arsenat-Lösung in Schritt
c1) Kalziumionen der C-S-H-Phase gegen Protonen ausgetauscht wird und in Schritt
c2) durch Reaktion der Kalziumionen mit den Phosphat- und/oder ArsenatIonen mindesten eine Kalziumphosphat-, Kalziumarsenat- oder Kalziumphosphat- Kalziumarsenat-Misch-Schicht auf dem Silizium enthaltenden Substrat gebildet wird.

6. Verfahren nach einem der Ansprüche 2 - 5, **dadurch gekennzeichnet, dass** die Kalziumphosphat-, Kalziumarsenat- oder Kalziumphosphat-Kalziumarsenat-Misch-Schicht in situ auf dem Silizium enthaltenden Substrat gebildet wird mit eine C-S-H-Phase als Kalzium-Quelle und dem Substrat als Silizium-Quelle für die C-S-H-Phase.

7. Beschichtetes Substrat nach Anspruch 1, erhältlich nach einem Verfahren nach einem der Ansprüche 2 - 6.

8. Verwendung eines beschichteten Substrats nach Anspruch 1 oder 7 oder des Produkts gemäß Anspruch 2, Schritt b) zur quantitativen Phosphat- und/oder Arsenatbestimmung.

9. Verwendung nach Anspruch 8, **dadurch gekennzeichnet, dass** die Bestimmung mittels IR-, FTIR-Spektroskopie und/oder über die Bestimmung der dielektrischen Funktion mittels Widerstandsbestimmung des Substrats erfolgt.

10. Verwendung eines beschichteten Substrats nach Anspruch 1 oder 7 oder des Produkts gemäß Anspruch 2, Schritt b) zur Isolierung von Phosphat und/oder Arsenat aus wässrigen Lösungen.

11. Verwendung eines beschichteten Substrats nach Anspruch 1 oder 7 als Modell für Zahnschmelz und/oder Implantate.

12. Verwendung eines beschichteten Substrats nach Anspruch 1 oder 7 zur Herstellung von dotierten Halbleitern.

## Claims

1. Silicon containing substrate selected from the group consisting of materiels containing silicon wafer, silicon powder or silicon dioxide, coated with one or more layers, at least one layer containing calcium phosphate (Ca3(PO4)2), calcium arsenate (Ca3(AsO4)2), calcium phosphate- calcium arsenate mixed layer or the corresponding hydrates or consisting thereof, **characterized in that** the calcium phosphate or calcium arsenate or the corresponding hydrate is formed in situ with a C-S-H-phase (calcium-silicon-hydrate-phase) as calcium source and the silicon containing substrate is a silicon and/or silicon dioxide source for the C-S-H-phase.

2. Method for producing a coated substrate according to claim 1, comprising the steps:
a) activating a silicon containing substrate selected from the group consisting of materiels containing silicon wafer, silicion powder or silicon dioxide, whereby the silicon containing substrate in step
a1) is brought into contact with a solution of H2O2 and H2SO4
and
a2) the product from a1) is flushed with H2O;
b) bringing the silicon containing substrate of step a) in contact with an aqueous calcium hydroxide solution (Ca(OH)2), at least one C-S-H-layer being formed on the silicon containing substrate;
c) bringing the silicon containing substrate of step b) in contact with an aqueous phosphate and/or arsenate solution.

3. Method according to claim 3, **characterized in that** step b) is carried out in the absence of carbon dioxide or **in that** carbonates are removed from the product of step b).

4. Method according to any of claims 2 - 3, **characterized in that** in the product of step b), the C-S-H-layer, the ratio of calcium to silicon is between 1:1 to 3:1.

5. Method according to any of claims 2 - 4, **characterized in that** in step c) on contact with an aqueous phosphate and/or arsenate solution in step
c1) calcium ions of the C-S-H-phase is exchanged for protons and in step
c2) at reaction of the calcium ions with the phosphate and/or arsenate ions at least one calcium phosphate, calcium arsenate or calcium phosphate-calcium arsenate mixed layer is formed on the silicon containing substrate.

6. Method according to any of claims 2 - 5, **characterized in that** the calcium phosphate, calcium arsenate or calcium phosphate-calcium arsenate mixed layer is formed in situ on the silicon containing substrate with one C-S-H-phase as calcium source and the substrate as silicon source for the C-S-H-phase.

7. Coated substrate according to claim 1, obtainable according to a method according to any of claims 2 - 6.

8. Use of a coated substrate according to claim 1 or 7 or of the product according to claim 2, step b), for the quantitative determination of phosphate and/or arsenate.

9. Use according to claim 8, **characterized in that** the determination is carried out by means of IR-, FTIR-spectroscopy and/or by determination of the dielectric function by means of resistance determination of the substrate.

10. Use of a coated substrate according to claim 1 or 7 or of the product according to claim 2, step b) for the isolation of phosphate and/or arsenate from aqueous solutions.

11. Use of a coated substrate according to claim 1 or 7 as model for enamel and/or implants.

12. Use of a coated substrate according to claim 1 or 7 for the production of doped semiconductors.

## Revendications

1. Un substrat contenant du silicium choisi du groupe composé des matériaux contenant des tranches de silicium, de la poudre de silicium ou du dioxyde de silicium, revêtu d'une ou de plusieures couches, au moins une couche contenant ou étant constituée par du phosphate de calcium (Ca3(PO4)2), de l'arséniate de calcium (Ca3(AsO4)2), une couche mixte de phosphate de calcium et d'arséniate de calcium ou les hydrates correspondants, **caractérisé en ce que** le phosphate de calcium ou l'arséniate de calcium ou l'hydrate correspondant est formé in situ avec une phase C-S-H (calcium-silicium-hydrate-phase) comme source de calcium et le substrat contenant du silicium est une source de silicium et/ou de dioxyde de silicium pour la phase C-S-H.

2. Procédé pour la production d'un substrat revêtu selon la revendication 1, contenant les étapes:
a) activation d'un substrat contenant du silicium choisi du groupe composé des matériaux contenant des tranches de silicium, de la poudre de silicium ou du dioxyde de silicium, le substrat contenant du silicium en étape
a1) étant mis en contact avec une solution de H2O2 et H2SO4
et
a2) le produit de a1) étant rincé avec H2O;
b) mettre le substrat contenant du silicium de l'étape a) en contact avec une solution aqueuse d'hydroxyde de calcium (Ca(OH)2), au moins une couche C-S-H étant formée sur le substrat contenant du silicium;
c) mettre le substrat contenant du silicium de l'étape b) en contact avec une solution aqueuse de phosphate et/ou d' arséniate.

3. Procédé selon la revendication 3, **caractérisé en ce que** l'étape b) est effectuée en l'absence de dioxyde de carbone ou **en ce que** des carbonates sont éliminés du produit de l'étape b).

4. Procédé selon l'une quelconque des revendications 2 - 3, **caractérisé en ce que** dans le produit de l'étape b), de la couche C-S-H le rapport de calcium à silicium est entre 1:1 à 3:1.

5. Procédé selon l'une quelconque des revendications 2 - 4, **caractérisé en ce qu'**à l'étape c) au contact avec une solution aqueuse de phosphate et/ou d' arséniate
à l'étape
c1) des ions de calcium de la phase C-S-H est échangé contre des protons et à l'étape
c2) par reaction des ions de calcium avec des ions de phosphate et/ou d'arséniate au moins une couche de phosphate de calcium, de l'arséniate de calcium, une couche mixte de phosphate de calcium et d'arséniate de calcium est formée sur le substrat contenant du silicium.

6. Procédé selon l'une quelconque des revendications 2 - 5, **caractérisé en ce que** la couche de phosphate de calcium, d'arséniate de calcium ou une couche mixte de phosphate de calcium et d'arséniate de calcium est formée in situ sur le substrat contenant du silicium avec une phase C-S-H comme source de calcium et le substrat comme source de silicium pour la phase C-S-H.

7. Substrat revêtu selon la revendication 1, pouvant être obtenu selon d'un procédé selon l'une quelconque des revendications 2 - 6.

8. Utilisation d'un substrat revêtu selon la revendication 1 ou 7 ou du produit selon la revendication 2, étape b), pour la détermination quantitative du phosphate et/ou de l'arséniate.

9. Utislisation selon la revendication 8, **caractérisé en ce que** la détermination est réalisée par spectroscopy d'IR-, FTIR et/ou par la détermination de la fonction diélectrique par la détermination de la résistance du substrat.

10. Utilisation d'un substrat revêtu selon la revendication 1 ou 7 ou du produit selon la revendication 2, étape b), pour l' isolation de phosphate et/ou d'arséniate des solutions aqueuses.

11. Utilisation d'un substrat revêtu selon la revendication 1 ou 7 comme modèle pour l'émail dentaire et/ou des implants.

12. Utilisation d'un substrat revêtu selon la revendication 1 ou 7 pour la production des sémi-conducteurs dopes.
